# FASCICULE DE BREVET EUROPEEN

(11) **EP 3 231 712 B1**
(45) Date de publication et mention de la délivrance du brevet: **24.04.2024**
(21) Numéro de dépôt: 17163153.4
(22) Date de dépôt: 27.03.2017
(51) Int. Cl.: B64D 37/00, B64D 37/32

(54) **COLLECTEUR DE CARBURANT POUR RESERVOIR D'UN AERONEF**
KRAFTSTOFFVERTEILER FÜR TANK EINES LUFTFAHRZEUGS
FUEL MANIFOLD FOR AN AIRCRAFT TANK

(30) Priorité: 13.04.2016 FR 1653278
(43) Date de publication de la demande: 18.10.2017
(73) Titulaire: Safran Aerosystems, 78370 Plaisir (FR)
(72) Inventeur: VIALLE, Julien, 42000 SAINT-ETIENNE (FR); CLARIS, Christophe, 42170 SAINT-JUST-SAINT-RAMBERT (FR)
(74) Mandataire: Delprat, Olivier

(56) Documents cités:
- WO-A2-2009/139801
- WO-A2-2015/099860
- FR-A1- 3 026 091

## Description

### DOMAINE TECHNIQUE

La présente invention se rapporte au domaine technique des réservoirs de carburant d'un aéronef, tel qu'un avion, un hélicoptère ou analogue, et concerne plus particulièrement un collecteur de carburant, gavé par les réservoirs, destiné à alimenter le moteur.

### ART ANTERIEUR

Dans le domaine de l'aéronautique, la réglementation en vigueur, telles que les certifications FAR25.981.b et CS25.981.b, ou leurs équivalents, impose des contraintes d'inflammabilité du carburant contenu dans les réservoirs des aéronefs.

En pratique, l'avionneur doit, soit être en mesure de prouver que le carburant se trouve en dessous de ces contraintes d'inflammabilité, soit mettre en place un moyen pour réduire le risque d'explosion.

Il est bien connu d'utiliser des systèmes d'inertage pour générer un gaz d'inertage, tel que de l'azote, ou tout autre gaz neutre tel que le dioxyde de carbone par exemple, et introduire ledit gaz d'inertage dans les réservoirs de carburant afin de réduire le risque d'explosion de ces réservoirs. Cette solution est largement utilisée pour les réservoirs possédant une bulle d'air importante, c'est-à-dire par exemple les réservoirs contenus dans les ailes de l'aéronef ou les réservoirs centraux principalement contenus dans le fuselage de l'aéronef.

Cependant, il s'avère difficile de prouver la conformité à la règlementation en vigueur pour un collecteur de carburant dont la fonction principale est d'être gavé en carburant pour être maintenu constamment plein afin d'éviter le désamorçage des pompes d'alimentation du moteur de l'aéronef.

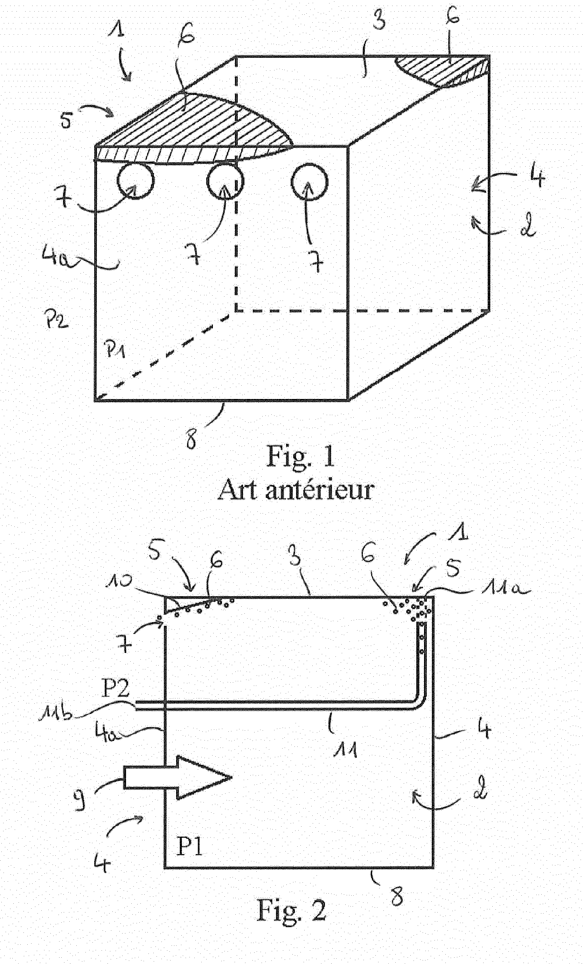

Le collecteur est destiné à communiquer avec au moins un réservoir de carburant. En référence à la figure 1 qui représente schématiquement un collecteur (1) selon l'art antérieur, celui-ci définit une enceinte (2) destinée à être remplie de carburant et à présenter une pression interne P1 supérieure à la pression interne P2 du réservoir de carburant. L'enceinte (2) comprend au moins un plafond (3) et au moins une paroi latérale (4a) reliés ensemble de manière à définir entre eux au moins une zone (5) dans laquelle au moins une bulle d'air (6) peut être piégée. Le collecteur comprend des trous de débordement (7) ménagés dans la paroi latérale (4a) à proximité de ladite zone de piégeage (5) et destinés à communiquer avec le réservoir de carburant.

Selon l'état de la technique, les trous de débordement ne permettent pas d'évacuer la bulle d'air piégée car des contraintes structurelles ne permettent pas de positionner les trous de débordement à l'affleurement du plafond supérieur du collecteur. De plus, d'autres bulles d'air peuvent être piégées, notamment lorsque le système de gavage du collecteur ne fonctionne pas et/ou pendant des phases de tangages et/ou roulis particulières.

Le collecteur est constamment plein de carburant de sorte que la bulle d'air à l'intérieur du collecteur est relativement petite ce qui limite, voire empêche toute injection de gaz d'inertage à l'intérieur du collecteur.

L'injection de gaz d'inertage dans le collecteur n'est également pas envisageable car elle entrainerait, une surpression du collecteur et du réservoir de carburant en communication, l'apparition de bulle et de mousse qui seraient de nature à nuire au fonctionnement des pompes situées dans le réservoir, et un transfert de carburant non maîtrisé via les trous de débordement.

Par ailleurs, il s'avère d'autant plus difficile d'assurer la conformité du collecteur avec la norme en vigueur lorsque celui-ci n'est pas directement connecté à un réservoir inerte, surtout si les problématiques de dégazage du carburant sont prises en considération.

Dans l'état actuel de la technique, pour rendre conforme le collecteur avec les normes en vigueur, une première solution consiste à pressuriser le collecteur par rapport à la pression atmosphérique de manière à décaler l'enveloppe d'inflammabilité du carburant. Cependant, la pressurisation expose le collecteur à des contraintes structurelles plus importantes, ayant un impact significatif sur la tenue mécanique de l'aéronef et sur sa sureté de fonctionnement. De plus, il s'avère difficile d'être précis dans l'estimation de ce phénomène physique vis-à-vis de l'inflammabilité du carburant.

Une autre solution consiste à injecter du gaz d'inertage dans le réservoir de carburant qui est en communication avec le collecteur et de considérer que, si le réservoir de carburant répond aux exigences des normes en vigueur, le collecteur y répond aussi. Cette solution repose uniquement sur un argumentaire qualitatif et il est difficile de justifier de son efficacité si l'on considère, comme évoqué plus haut, le dégazage du carburant dans le collecteur. De plus, si le réservoir de carburant en communication ne nécessite pas d'inertage, cette solution ne fonctionne pas.

Une autre solution consiste à revêtir certaines parois internes du collecteur avec une mousse apte à empêcher la propagation des flammes en cas d'inflammation du carburant et à étouffer le feu. Cependant, outre la diminution du volume utile du collecteur, la mousse absorbe une quantité de carburant qui ne peut être restituée, diminuant ainsi l'autonomie de l'aéronef. Par ailleurs, la mousse peut se désagréger et être aspirée par les moyens d'alimentation du moteur. Enfin, de l'électricité statique peut apparaitre au sein de la mousse, entrainant un risque d'inflammation.

Une autre solution est décrite dans le document WO2009/139801 A2.

### EXPOSE DE L'INVENTION

L'un des buts de l'invention est donc de remédier à ces inconvénients en proposant un collecteur de carburant pour réservoir de carburant d'un aéronef, dont la conception permet de prouver, de manière assurée et quantifiable, sa conformité aux normes en vigueur relatives aux contraintes d'inflammabilité du carburant.

A cet effet, et pour résoudre les problèmes précités, il a été mis au point un collecteur de carburant destiné à communiquer avec au moins un réservoir de carburant d'un aéronef. Le collecteur définit une enceinte destinée à être remplie de carburant et à présenter une pression interne P1 supérieure à la pression interne P2 du réservoir de carburant. L'enceinte comprend au moins un plafond et au moins une paroi latérale pourvue de trous de débordement destinés à communiquer avec le réservoir de carburant.

Selon l'invention, le collecteur comprend des moyens d'évacuation vers le réservoir de carburant d'une bulle d'air piégée entre le plafond et le niveau des trous de débordement selon la revendication 1.

Ainsi, l'invention permet d'évacuer la bulle d'air hors du collecteur, sous l'effet de la pression exercée par le carburant. Cette pression est générée, d'une part, par le niveau de carburant dans le collecteur, notamment dû à la forme de l'aile de l'aéronef, et, d'autre part, par le débordement de carburant lié au gavage du collecteur.

La bulle d'air est redirigée vers le réservoir de carburant adjacent, dont la pression est inférieure, et rejoint la bulle d'air dudit réservoir. De ce fait, le collecteur ne nécessite aucun système d'inertage du collecteur puisqu'il y a absence de bulle d'air. La solution est donc adaptable à toute configuration d'aéronef. L'aéronef bénéficie d'un gain de poids et de fiabilité, et d'un fonctionnement du système d'inertage simplifié. La certification de conformité aux normes est également facilitée. L'invention permet également de diminuer les interactions avec le système de gestion du carburant, notamment les pompes et éjecteurs, et évite les problèmes de transferts de carburant vers le système de génération de gaz d'inertage, ou les transferts à partir du collecteur vers les autres réservoirs de l'aéronef. L'évacuation de la bulle d'air du collecteur génère un transfert de carburant depuis le réservoir jusqu'au collecteur. Ce transfert devra être pris en compte dans le calcul du débordement total du collecteur.

Selon une forme de réalisation particulière, les moyens d'évacuation se présentent sous la forme d'au moins un pan incliné reliant la paroi latérale et le plafond, et disposé de sorte que les trous de débordement soient ménagés à l'affleurement dudit pan incliné. Ainsi, le pan incliné permet aux bulles d'air piégées au niveau du plafond de s'évacuer vers le réservoir adjacent par les trous de débordement.

Selon une autre forme de réalisation, les moyens d'évacuation se présentent sous la forme d'au moins un tuyau présentant au moins une entrée agencée entre le plafond et le niveau des trous de débordement, et une sortie agencée hors du collecteur et destinée à communiquer avec le réservoir de carburant adjacent.

Ainsi, étant donné que la pression à l'intérieur du collecteur est supérieure à celle du réservoir adjacent, les bulles d'air piégées au niveau du plafond sont drainées et évacuées par le tuyau vers le réservoir de carburant.

Afin de rassembler les bulles d'air vers une zone déterminée et diminuer le nombre de tuyaux à mettre en oeuvre, le plafond de l'enceinte est concave.

### DESCRIPTION SOMMAIRE DES FIGURES

D'autres avantages et caractéristiques ressortiront mieux de la description qui va suivre, donnée à titre d'exemple non limitatif, du collecteur de carburant selon l'invention, à partir des dessins annexés dans lesquels :
- la figure 1 est une représentation schématique en perspective d'un collecteur de carburant selon l'art antérieur ;
- la figure 2 est une représentation schématique vue de côté et en coupe d'un collecteur de carburant selon l'invention.

### DESCRIPTION DETAILLEE DE L'INVENTION

En référence à la figure 2, l'invention concerne un collecteur (1) de carburant pour réservoir de carburant d'un aéronef.

Le collecteur (1) comprend, d'une manière générale, des parois latérales (4), un fond (8) et un plafond (3) reliés ensemble pour former une enceinte (2) définissant un volume de réception de carburant.

Le collecteur (1) est assujetti à des moyens de gavage (9) en carburant, bien connus de l'état de la technique, pour maintenir constamment l'enceinte (2) du collecteur (1) pleine de carburant. Le collecteur (1) comprend, notamment au niveau de l'une de ses parois latérales (4a) des trous de débordement (7) de carburant. L'enceinte (2) présente une pression interne P1 supérieure à la pression interne P2 du réservoir de carburant auquel le collecteur (1) est connecté.

La liaison entre le plafond (3) et les parois latérales (4) du collecteur (1) définit des zones de piégeage (5) dans lesquelles des bulles d'air (6) peuvent être piégées. A cet effet, le collecteur (1) comprend des moyens d'évacuation des bulles d'air (6) piégées vers les trous de débordement (7) pour leur évacuation vers le réservoir de carburant. Les moyens d'évacuation se présentent par exemple sous la forme d'au moins un pan incliné (10) reliant la paroi latérale (4a) et le plafond (3). Le pan incliné (10) est agencé de telle sorte que les trous de débordement (7) sont ménagés à l'affleurement dudit pan incliné (10).

Ainsi, étant donné la différence de pression entre l'intérieur de l'enceinte (2) et le réservoir de carburant, les bulles d'air (6) glissent le long du pan incliné (10) et sont évacuées par les trous de débordement (7) pour rejoindre la bulle d'air du réservoir de carburant, lequel réservoir est assujetti à un système de génération et d'injection de gaz d'inertage.

Pour les autres zones de piégeage (5), définies au niveau de la liaison entre le plafond (3) et les autres parois latérales (4) qui ne comprennent pas de trous de débordement (7), le collecteur (1) comprend un tuyau (11) présentant au moins une entrée (11a) agencée dans ladite zone de piégeage (5) et une sortie (11b) agencée hors du collecteur (1) et dans le réservoir de carburant adjacent. Etant donné la différence de pression entre le collecteur (1) et le réservoir adjacent, les autres bulles d'air (6) sont évacuées, par l'intermédiaire du tuyau (11), vers ledit réservoir adjacent. Selon une forme de réalisation particulière, l'entrée (11a) du tuyau (11) est perforée d'orifices et est fixée au niveau du plafond (3) du collecteur (1).

Plusieurs tuyaux d'évacuation (11) peuvent être mis en oeuvre, indépendamment du fait que le collecteur (1) comprend un pan incliné (10) ou non, dont les entrées (11a) sont agencées à différents endroits au niveau du plafond (3), entre ledit plafond (3) et le niveau des trous de débordement (7). Le collecteur (1) peut également comprendre un tuyau d'évacuation (11) dont l'entrée (11a) est agencée au niveau du pan incliné (10).

D'une manière avantageuse, non illustrée, et afin de rassembler les bulles d'air (6) vers une zone déterminée et diminuer le nombre de tuyaux (11) à mettre en oeuvre, le plafond (3) de l'enceinte (2) est concave.

L'évacuation des bulles d'air (6) du collecteur (1) génère un transfert de carburant depuis le réservoir jusqu'au collecteur (1).

Il ressort de ce qui précède que la conception du collecteur (1) de carburant selon l'invention permet de prouver, de manière assurée et quantifiable, sa conformité aux normes en vigueur relatives aux contraintes d'inflammabilité du carburant puisqu'il permet d'évacuer les bulles d'air afin d'éviter les risques d'inflammabilité du carburant.

## Revendications

1. Collecteur (1) de carburant destiné à communiquer avec au moins un réservoir de carburant d'un aéronef, ledit collecteur (1) définissant une enceinte (2) destinée à être remplie de carburant et à présenter une pression interne P 1 supérieure à la pression interne P2 du réservoir de carburant, l'enceinte (2) comprend au moins un plafond (3) et au moins une paroi latérale (4a) pourvue de trous de débordement (7) destinés à communiquer avec le réservoir de carburant, **caractérisé en ce qu'**il comprend des moyens d'évacuation (10, 11) vers le réservoir de carburant d'une bulle d'air (6) piégée entre le plafond (3) et le niveau des trous de débordement (7), lesdits moyens d'évacuation se présentant :
- sous la forme d'au moins un pan incliné (10) reliant la paroi latérale et le plafond (3), et disposé de sorte que les trous de débordement (7) soient ménagés à l'affleurement dudit pan incliné (10) ; et/ou
- sous la forme d'au moins un tuyau (11) présentant au moins une entrée (11a) agencée entre le plafond (3) et le niveau des trous de débordement (7), et une sortie (11b) agencée hors du collecteur (1) et destinée à communiquer avec le réservoir de carburant adjacent.

2. Collecteur (1) selon la revendication 1 **caractérisée en ce que** le plafond (3) de l'enceinte (2) est concave.

## Patentansprüche

1. Verteiler (1) für Kraftstoff, der dazu bestimmt ist, mit mindestens einem Kraftstofftank eines Luftfahrzeugs zu kommunizieren, wobei der Verteiler (1) einen Einschluss (2) definiert, der dazu bestimmt ist, mit Kraftstoff gefüllt zu werden, und einen Innendruck P1 größer als der Innendruck P2 des Kraftstofftanks aufzuweisen, wobei der Einschluss (2) mindestens eine Decke (3) und mindestens eine Seitenwand (4a) umfasst, die mit Überlauflöchern (7) versehen ist, die dazu bestimmt sind, mit dem Kraftstofftank zu kommunizieren, **dadurch gekennzeichnet, dass** er Mittel zum Austragen (10, 11) einer Luftblase (6), die zwischen der Decke (3) und dem Niveau der Überlauflöcher (7) eingeschlossen ist, zum Kraftstofftank umfasst, wobei sich die Mittel zum Austragen wie folgt darstellen:
- in der Form mindestens einer schrägen Fläche (10), welche die Seitenwand und die Decke (3) verbindet, und derart angeordnet ist, dass die Überlauflöcher (7) bündig mit der schrägen Fläche (10) eingesetzt sind; und/oder
- in der Form mindestens eines Rohres (11), das mindestens einen Eingang (11a) aufweist, der zwischen der Decke (3) und dem Niveau der Überlauflöcher (7) angeordnet ist, und einen Ausgang (11b), der außerhalb des Verteilers (1) angeordnet ist, und dazu bestimmt ist, mit dem benachbarten Kraftstofftank zu kommunizieren.

2. Verteiler (1) nach Anspruch 1, **dadurch gekennzeichnet, dass** die Decke (3) des Einschlusses (2) konkav ist.

## Claims

1. Fuel manifold (1) designed to communicate with at least one fuel tank of an aircraft, said manifold (1) defining an enclosure (2) designed to be filled with fuel and to present an internal pressure P1 greater than the internal pressure P2 of the fuel tank, wherein the enclosure (2) comprises at least one ceiling (3) and at least one side wall (4a) provided with overflow holes (7) designed to communicate with the fuel tank, **characterised in that** it comprises means of evacuation (10, 11) to the fuel tank of an air bubble (6) trapped between the ceiling (3) and the level of the overflow holes (7), said means of evacuation presenting:
- in the form of at least one sloping panel (10) connecting the side wall and the ceiling (3), and positioned such that the overflow holes (7) are arranged flush with said sloping panel (10); and/or
- in the form of at least one pipe (11) presenting at least one inlet (11a) arranged between the ceiling (3) and the level of the overflow holes (7), and an outlet (11b) positioned outside of the manifold (1) and designed to communicate with the adjacent fuel tank.

2. Manifold (1) according to claim 1, **characterised in that** the ceiling (3) of the enclosure (2) is concave.
